# EUROPEAN PATENT SPECIFICATION

(11) **EP 2 373 714 B1**
(45) Date of publication and mention of the grant of the patent: **12.02.2014**
(21) Application number: 09809048.3
(22) Date of filing: 18.12.2009
(51) Int. Cl.: C08F 290/06, C09D 151/08, C08G 63/47, C09D 167/07, C08G 63/91, C08G 63/48

(54) **LOW VOC AQUEOUS POLYMER DISPERSIONS**
VOC-ARME WÄSSRIGE POLYMERDISPERSIONEN
DISPERSIONS AQUEUSES DE POLYMÈRES À FAIBLE TENEUR EN COMPOSÉS ORGANIQUES VOLATILS

(30) Priority: 19.12.2008 US 139013 P
(43) Date of publication of application: 12.10.2011
(73) Proprietor: The Sherwin-Williams Company, Cleveland, OH 44115 (US)
(72) Inventor: KOGLIN, Kimberly, A., Olmsted Falls OH 44138 (US); MARLOW, James, K., Macedonia OH 44056 (US); RUHOFF, Philip, J., Shaker Heights OH 44122 (US); TOMKO, Richard, F., North Olmsted OH 44070 (US)
(74) Representative: Heinemann, Monica
(86) International application number: PCT/US2009/068734
(87) International publication number: WO 2010/080620

(56) References cited:
- EP-A1- 1 149 874
- WO-A1-01/60887

## Description

The present invention relates to the formulation and processing of water reducible alkyds, and in more specific embodiments, alkyd acrylic resin dispersions suitable for use in formulating low VOC paints and coatings. In some embodiments the water dispersible alkyd acrylic resin has greater than 20%, and in other embodiments greater than 30% and in still further embodiments, greater than 50% of its weight derived directly from biorenewable starting materials.

The processes taught herein as well as the resulting alkyd acrylic resins and the paints and coatings subsequently formed therefrom represent progress toward the formulation of industrial and architectural coatings that require less use of virgin petroleum based starting materials and that generate lower levels of volatile organic compounds (VOCs) than traditional water reducible and conventional solvent borne alkyd coatings. Exemplary traditional water reducible alkyd coatings may have greater than 300g/L VOC and conventional solvent borne alkyd coatings, greater than 400 g/L VOC. The processing methods taught herein also may improve efficiency in formulating alkyd acrylic resins, by reducing batch time and may permit the use of a wider array of organic and non-water-miscible solvents during polymerization without adversely affecting resin dispersibility in water or VOC levels.

According to the present invention, acidolysis of an engineered polyester, exemplified by recyclable polyesters, such as polyalkylene terphthalate and polyalkylene naphthalate, and in other embodiments, by a biorenewable polyester, such as polylactic acid, yields acid functional intermediates, which can be further reacted with polyepoxides, polyamines, or polyol functional materials, or blends thereof, to yield resin intermediates, which, in some embodiments, may be useful as binder resins or diluents in conventional alkyd systems, or, in other embodiments, can be further modified or reacted with one or more of variety of other monomers and ethylenically unsaturated coupling agents to form macromonomers and polymers and, particularly acrylic polymers, and more particularly, alkyd acrylic polymers that can be dispersed into water in the presence of a base to yield an alkyd acrylic dispersion. In some embodiments, the resin may be stably water dispersable without use of surfactants. Coatings may be developed using the described acid functional intermediates, resin intermediates, macromonomers or polymer dispersions as the sole or primary binder.

In particularly useful embodiments, the engineered polyester is processed by means of an acidolysis reaction to yield alkyd acid-functional intermediates. The alkyd acid-functional intermediate(s) may be repolymerized in the presence of a polyepoxides, polyamines, and/or polyols, and/or may subsequently be further reacted with an ethylenically unsaturated coupling agent to yield a macromonomer suitable for polymerization with conventional (meth)acrylic, vinylic or other ethylenically unsaturated monomers to form an alkyd acrylic polymer that is dispersible in water.

In the present invention, distillation, preferably vacuum distillation, may be selectively employed during polymerization to remove substantially all of the solvents that would otherwise contribute to VOC levels or inhibit dispersion of the polymer into water. Vacuum distillation may be used to remove as much as 99.9% of such solvents. In this way, solvents which have long been avoided in formulating acrylic resins for aqueous systems, because of the contribution to VOC levels or negative impact on water dispersibility, may be used during polymerization to, for example, wash the polymerization reaction chamber of monomer which can polymerize on the walls of the chamber. In conventional systems, this build-up results in a waste of monomer and must be cleaned from the reaction chamber before a subsequent polymer batch can be prepared. Moreover, recovery of these solvents allows them to be recycled for subsequent polymerizations. In another embodiment, at least a portion of the volatile organic solvents may be replaced with drying or semi-drying oils in order to maintain or reduced the viscosity of the polymer melt after the volatile solvents are removed by distillation. The maintenance of a reduced viscosity of the polymer melt allows the melt to be flowable at an elevated temperature to facilitate dispersion into basic water.

### DETAILED DESCRIPTION OF THE INVENTION

### I. Engineered Polyester Starting Materials

In accordance with the present invention, the process of formulating aqueous polymer dispersions may begin with acidolysis of an engineered polyester to yield shorter chain length, acid (hydroxyl) functional intermediates. Suitable engineered polyesters may include recyclable and biorenewable polyesters.

Exemplary recyclable polyesters include the polyalkylene terephthalates and polyalkylene naphthalates. Within the polyalkylene naphthalates, polyethylene naphthalate is useful. Within the polyalkylene terephthalates, polyethylene terephthalate (PET) and polypropylene terephthate (PPT) are particularly useful. PET is widely used in the manufacture of disposable plastic articles, such as bottles, and thus, these disposed articles offer a ready source of recyclable PET, which can be reclaimed for use in the present invention. Notwithstanding, it will be understood that virgin PET may also be used.

Methods of preparing PET, including methods of obtaining recycled, reclaimed or post-industrial PET stocks are well known in the art. While recycled PET is a particularly useful starting material for ecological reasons, the method of obtaining the PET is not critical to the practice of this invention.

Biorenewable polyesters are those derived from agricultural products, such as corn, or derived as byproducts from microorganisms or genetically modified bacteria. Exemplary biorenewable polyesters include polylactic acid (PLA) and the polyhydroxyalkanic acids (PHA). Lactic acid polymers include polylactic acid and copolymers of lactic acid and polyhydroxyalkanoic acids, including poly(D,L-lactide), poly(L-lactide), polyglycolic acid, poly(D,L- lactide-co-glycolide), and poly(L-lactide-coglycolide).

Useful PHAs may include, without limitation, poly(3-hydroxyalkanoic acids) such as poly(3-hydroxypropanoic acid), and poly(4-hydroxyalkanoic acids) such as poly(4-hydroxybutyric acid) and copolymers including any of the 3-hydroxyalkanoic acid or 4-hydroxyalkanoic acid monomers described herein or blends thereof.

Methods of preparing polylactic acid and polyhydroxyalkanoic acids are well known in the art and the method of preparation of the polylactic acid and polyhydroxyalkanoic acid is not critical to the practice of this invention

For purposes of this invention, the term "engineered polyester" will be used to refer to the class of polyesters including the recyclable and biorenewable polyesters previously discussed. Moreover, without intending to limit the scope of the invention, but for purposes of clarity, PET will be used in the following disclosure as an exemplary recyclable polyester and PLA as an exemplary biorenewable polyester.

For purposes of this invention, the PET or PLA should be provided in a comminuted form. It can be flaked, granulated, ground to a powder or pelletized. The only constraint placed on the polyester prior to acidolysis is that it be relatively pure; that is, there should not be a level of impurities above about one weight percent nor should there be any appreciable level of impurities which are chemically reactive within the described processes.

### II. Acidolysis Reaction to Yield Acid Functional (alkyd) Intermediates.

Engineered polyesters are generally comprised of repeating monomer or comonomer units connected by ester linkages. PLA, for example, is comprised of repeating units of lactic acid. Each repeating unit of PLA has a weight average molecular weight of 90. PET is comprised of repeating units of monomers formed from the reaction product of terephthalic acid and ethylene glycol.

When polyester and an acid- or anhydride-functional material are reacted together in the presence of a catalyst (optional) and heat, the high molecular weight polyester molecule may be depolymerized or digested into monomeric and/or oligomeric, acid functional intermediates. This is accomplished through acidolysis of the ester linkages and exchange by the acid with the acid monomer units of the polyester molecule. This exchange continues to occur until a new equilibrium is established between the polyester, the shorter chain length polyester, the shorter chain length polyester substituted with the acid, the acid-functional material, and polyester acid monomer. This equilibrium makes it possible to substantially reverse the polymerization process and depolymerize PLA or PET into its starting materials. It is also possible, by virtue of the acid or anhydride selected for use in the acidolysis reaction, to add additional functionality to the otherwise acid functional intermediates. The acidolysis reaction can be carried out in the presence of a solvent or fusion in solventless systems.

### A. Acids

Suitable acid-functional materials that may be useful in the acidolysis reaction include saturated and unsaturated mono-functional acids such as benzoic, crotonic, and sorbic acids; and acids having an acid functionality on average of at least two, such as phthalic acid, isophthalic acid, 1,4-cyclohexane dicarboxylic acid, 1,3-cyclohexane dicarboxylic acid, succinic acid, adipic acid, azelaic acid, itaconic acid, maleic acid, fumaric acid, trimellitic acid, trimesic acid, naphthalene dicarboxylic acids, carboxy-terminated polybutadiene, 4,4'-dicaboxy diphenoxy ethane, and the hydroxy carboxylic acids such as 12-hydroxystearic acid, ricinoleic acid and biorenewable acids, such as. 3-hydroxy propanoic acid, 4-hydroxybutanoic acid, etc. Other suitable acids may include the saturated acids such as butyric, caproic, caprylic, capric, lauric, myristic, palmitic, stearic, arachidic, behenic and lignoceric acids; the unsaturated acids such as palmitoleic, oleic, linoleic, linolenic, eleostearic, licaric, gadoleic and eracic acids; and the oils (and their fatty acids) such as canola, rapeseed, castor, dehydrated castor, coconut, coffee, corn, cottonseed, fish, lard, linseed, oticica, palm kernal, peanut, perilla, safflower, soya or soybean, sunflower, tallow, tung, walnut, vernonia, tall and menhaden oils; and blends and mixtures of natural and synthetic oils and fatty acids, particularly those oils and fatty acids with high iodine numbers.

### B. Anhydrides

Representative anhydrides that may be useful in the acidolysis reaction may include glutaric anhydride, adipic anhydride, itaconic anhydride, diglycolic acid anhydride, and the like.

Other useful anhydrides may include those having a free carboxyl group in addition to the anhydride group such as trimellitic anhydride, 2,6,7-naphthalene tricarboxylic anhydride, 1,2,4-butane tricarboxylic anhydride, 1,3,4-cyclopentane tricarboxylic anhydride. These may be used in minor amounts.

It should be appreciated that other acids and anhydrides should be considered equivalents of those named herein.

The acid- or anhydride functional material will generally have a number average molecular weight below about 2000. Preferably the acid- or anhydride-functional material will have a number average molecular weight of below about 600. Typical number average molecular weights of these materials will range from about 96 to about 600.

Especially useful acids include the vegetable fatty acids described above, and particularly, unsaturated fatty acids. Soya fatty acid and tall oil fatty acid are useful in many embodiments.

### C. Catalysts

Optionally, a catalyst can be used for the acidolysis reaction. If used, suitable catalysts for acidolysis of polyester include the traditional transesterification catalysts including stannous octoate, calcium hydroxide, lithium hydroxide, barium hydroxide, sodium hydroxide, lithium methoxide, manganese acetate tetrahydrate, phosphates, dibutyl tin oxide, butyl stannoic acid, and hydrated monobutyl tin oxide. If used, the catalyst should be present in an amount of from about 0.1 weight % to about 1.5 weight % based upon the total weight of the polyester and acid-functional material.

### D. Solvents

When it may be desirable to use a solvent in the acidolysis reaction, suitable solvents may include xylenes and higher boiling point ketones such as methyl propyl ketone, methyl amyl ketone and the like.

### III. Acidolysis Digestion Products

Subsequent to acidolysis, the polyester fragments and products in equilibrium therewith are predominantly acid-functional. In one particularly useful embodiment, the acid used in the acidolysis reaction may be a fatty acid, such as those described in Section IIA, and particularly, soya fatty acid, thereby yielding, as one digestion product, acid functional intermediates that are additionally endowed with a saturated or unsaturated aliphatic chain derived from the fatty acid. These may be referred to herein as alkyd acid-functional intermediates. As described further below, the acid groups of the acidolysis reaction products can be further reacted with hydroxyl, amine, or epoxy-functional materials and the like to form resin intermediates or reactive diluents for use in a variety of coating compositions.

### IV. Reactions of Acidolysis Digestion Products

The acid functional intermediates of the acidolysis reaction may be further reacted with one or more hydroxyl-functional reactants, optionally in the presence of other polyacids, to yield hydroxyl-functional resin intermediates. The resin intermediates may also be reacted with amine or epoxy functional reactants as described below, and blends thereof.

### A. Hydroxy-Functional Reactants

Suitable hydroxyl-functional reactants that may be used in further reaction with the acid functional intermediates may include:

Alcohols. Generally, the alcohols will have number average molecular weights of below about 4000, and typically, number average molecular weights will range from about 30 to about 4000, and especially 100 to about 600. Methods of preparing alcohols are well known in the art and the method of preparation of the alcohols is not critical to the practice of this invention.

Suitable alcohols include the C1 to C22 linear and branched saturated and unsaturated alcohols including, for example, methanol, ethanol, propanol, butanol, hexanol, linoleyl alcohol, trimethylolpropane diallyl ether, allyl alcohol, 2-mercaptoethanol and the like. Additionally, useful alcohols include the hydroxy-functional polyethers, polyesters, polyurethanes, polycaprolactones, etc. as generally discussed below.

**A1a. Saturated and unsaturated polyols.** Useful saturated and unsaturated polyols may include glycerol, castor oil, ethylene glycol, dipropylene glycol, 2,2,4-trimethyl 1,3-pentanediol, neopentyl glycol, 1,2-propanediol, 1,3-propanediol, 1,4-butanediol, 1,3-butanediol, 2,3-butanediol, 1,5-pentanediol, 1,6-hexanediol, 2,2-dimethyl-1,3-propanediol, Bisphenol A tetraethoxylate, 2,2'-thio diethanol, dimethylol propionic acid, acetylenic diols, hydroxy-terminated polybutadiene, 1,4-cyclohexanedimethanol, 1,2-cyclohexanedimethanol, 1,3-cyclohexanedimethanol, 1,4-bis(2-hydroxyethoxy)cyclohexane, trimethylene glycol, tetra methylene glycol, pentamethylene glycol, hexamethylene glycol, decamethylene glycol, diethylene glycol, triethylene glycol, tetraethylene glycol, norbomylene glycol, 1,4-benzenedimethanol, 1,4-benzenediethanol, 2,4-dimethyl-2-ethylenehexane-1,3-diol, 2-butene-1,4-diol, and polyols such as trimethylolethane, trimethylolpropane, di-trimethylolpropane, trimethylolpropane monoallyl ether, trimethylolhexane, triethylolpropane, 1,2,4-butanetriol, pentaerythritol, dimethylolpropane, dipentaerythritol, methyl propanediol, phenolic polyols, etc.

**A1b. Polyether polyols.** Suitable polyether polyols are well known in the art and are conveniently prepared by the reaction of a diol or polyol with the corresponding alkylene oxide. Representative examples may include the polypropylene ether glycols and polyethylene ether glycols.

**A1c.** Another useful class of hydroxy-functional polymers comprises those prepared by condensation polymerization reaction techniques as are well known in the art. Representative condensation polymerization reactions include polyesters prepared by the condensation of polyhydric alcohols and polycarboxylic acids or anhydrides, with or without the inclusion of drying oil, semi-drying oil, or non-drying oil fatty acids. By adjusting the stoichiometry of the alcohols and the acids while maintaining an excess of hydroxyl groups, hydroxy-functional polyesters can be readily produced to provide a wide range of desired molecular weights and performance characteristics.

The polyester polyols are derived from one or more aromatic and/or aliphatic polycarboxylic acids, the anhydrides thereof, and one or more aliphatic and/or aromatic polyols. The carboxylic acids include the saturated and unsaturated polycarboxylic acids and the derivatives thereof, such as maleic acid, fumaric acid, succinic acid, adipic acid, azelaic acid, and dicyclopentadiene dicarboxylic acid. The carboxylic acids also include the aromatic polycarboxylic acids, such as phthalic acid, isophthalic acid, terephthalic acid, etc. Anhydrides such as maleic anhydride, phthalic anhydride, trimellitic anhydride, or NADIC Methyl Anhydride (brand name for methyl bicyclo[2.2.1]heptene-2,3-dicarboxylic anhydride isomers) can also be used.

Representative saturated and unsaturated polyols which can be reacted in stoichiometric excess with the carboxylic acids to produce hydroxy-functional reactants include the diols taught above. Typically, the reaction between the polyols and the polycarboxylic acids is conducted at about 120° C. to about 200° C. in the presence of an esterification catalyst such as dibutyl tin oxide.

**A1d.** Additionally, hydroxy-functional reactants can be prepared by the ring opening reaction of epoxides and/or polyepoxides with primary or, preferably, secondary amines or polyamines to produce hydroxy-functional polymers. Representative amines and polyamines include ethanol amine, N-methylethanol amine, dimethyl amine, ethylene diamine, isophorone diamine, etc. Representative polyepoxides include those prepared by condensing a polyhydric alcohol or polyhydric phenol with an epihalohydrin, such as epichlorohydrin, usually under alkaline conditions.

**A1e.** Other useful hydroxy-functional polymers can be prepared by the reaction of an excess of at least one alcohol, such as those representatively described above, with isocyanates to produce hydroxy-functional urethanes.

Representative mono-functional isocyanates include allyl isocyanate and tolulyl isocyanate. Representative polyisocyanates include the aliphatic compounds such as ethylene, trimethylene, tetramethylene, pentamethylene, hexamethylene, 1,2-propylene, 1,2-butylene, 2,3-butylene, 1,3-butylene, ethylidene and butylidene diisocyanates; the cycloalkylene compounds such as 3-isocyanato methyl-3,5,5-trimethyl cyclohexylisocyanate, and the 1,3-cyclopentane, 1,3-cyclohexane, and 1,2-cyclohexane diisocyanates; the aromatic compounds such as m-phenylene, p-phenylene, 4,4'-diphenyl, 1,5-naphthalene and 1,4-naphthalene diisocyanates; the aliphatic-aromatic compounds such as 4,4'-diphenylene methane, 2,4- or 2,6-toluene, 4,4'-toluidine, and 1,4-xylylene diisocyanates; benzene 1,3-bis (1-isocyanato-1-methyl ethyl); the nuclear substituted aromatic compounds such as dianisidine diisocyanate, 4,4'-diphenylether diisocyanate and chlorodiphenylene diisocyanate; the triisocyanates such as triphenyl methane-4,4',4"-triisocyanate, 1,3,5-triisocyanate benzene and 2,4,6-triisocyanate toluene; and the tetraisocyanates such as 4,4'-diphenyl-dimethyl methane-2,2'-5,5'-tetraisocyanate; the polymerized polyisocyanates such as tolylene diisocyanate dimers and trimers, and other various polyisocyanates containing biuret, urethane, and/or allophanate linkages. The isocyanates and the alcohols are typically reacted at temperatures of 25° C. to about 150° C. to form the hydroxy-functional polymers.

Especially preferred hydroxy-functional reactants in the practice of this invention include, but are not limited to, ethylene glycol, dipropylene glycol, 2,2,4-trimethyl 1,3-pentanediol, neopentyl glycol, 1,2-propanediol, 1,3-propanediol, 1,4-butanediol, 1,3-butanediol, 2,3-butanediol, 1,5-pentanediol, 1,6-hexanediol, 2,2-dimethyl-1,3-propanediol, 1,4-cyclohexanedimethanol, 1,2-cyclohexanedimethanol, 1,3-cyclohexanedimethanol, 1,4-bis(2-hydroxyethoxy)cyclohexane, trimethylene glycol, tetra methylene glycol, pentamethylene glycol, hexamethylene glycol, decamethylene glycol, diethylene glycol, triethylene glycol, tetraethylene glycol, norbomylene glycol, 1,4-benzenedimethanol, 1,4-benzenediethanol, 2,4-dimethyl-2-ethylenehexane-1,3-diol, 2-butene-1,4-diol, and polyols such as trimethylolethane, trimethylolpropane, trimethylolpropane monoallyl ether, trimethylolhexane, triethylolpropane, di-trimethylolpropane, 1,2,4-butanetriol, glycerol, pentaerythritol, dipentaerythritol, and mixtures thereof.

The reaction of the acid functional intermediate and one or more of the hydroxyl functional reactants previously identified, may be carried out in the presence of a polyacid, such as isophthalic acid or terphthalic acid or blends thereof. Other useful polyacids may include trimellitic acid, trimesic acid or acid-anhydrides such as trimellitic anhydride or the anhydrides listed above such as tetrahydrophthalic anhydride, hexahydrophthalic anhydride, methylhexahydrophthalic anhydride, succinic anhydride, dodecenylsuccinic anhydride, octylsuccinic anhydride or maleic anhydride.

As noted previously, the monomeric and/or oligomeric acid functional intermediates may be reacted with amine or epoxy functional reactants, in addition to or in place of hydroxyl functional reactants.

### B. Amine-Functional Reactants

Suitable amine-functional reactants that may be used in further reaction with the acid functional intermediates, to yield resin intermediates may include the primary or secondary amines, diamines or polyamines in which the remainder of the molecule attached to the nitrogen atoms can be saturated or unsaturated, aliphatic, or alicyclic. Exemplary suitable aliphatic and alicyclic amines may include allylamine, decylamine, hexyl amine, octyl amine, propylene imine, fattyamines, etc. Exemplary diamines may include ethylene diamine, propylene diamine, butylene diamine, hexamethylene diamine, cyclohexane diamine, piperazine, hydrazine, 1,8-methane diamine, isophorone diamine, propane-2,2-cyclohexyl amine, and methane-bis-(4-cyclohexyl amine)and mixtures thereof.

Amino alcohols can also be employed, including, for example, ethanolamine, propanolamines, butanolamines, pentanolamines, amino-2-methyl- 1-propanol, amino-3-methyl-1-butanol, etc. and multi-functional aminoalcohols such as diethanolamine, triethanolamine, etc.

### C. Epoxy-Functional Materials

It has been previously described that a ring opening reaction of epoxides and/or polyepoxides can yield hydroxyl functional reactants that can be reacted with the acid functional intermediates (i.e., the digestion products of acidolysis) to yield macromonomers. In another embodiment, however, epoxides and/or polyepoxides can be directly reacted with the acid functional intermediates, as the acid will react with the epoxy ring. Diglycidyl reactants, such as butanediol diglycidyl ether, are particularly useful. Other di- and tri-epoxies that may be useful reactants include Bisphenol A diglycidyl ether, vinyl cyclohexene dioxide, Bis (3,4-epoxycyclohexyl adipate),1,5-pentanediol diglycidyl ether, 1,6-hexanediol diglycidyl ether, 1,7- heptanediol diglycidyl ether, 1,8-octanediol diglycidyl ether, 1,9-nonanediol diglycidyl ether, and 1,10-decanediol diglycidyl ether and triglycidyl isocyanurate (TGI). The reaction product of TGI and acid functional intermediates may yield useful isocyanurate, hydroxyl-functional macromonomers or resin intermediates

One useful sub-group of epoxides, include those having (meth)acrylate unsaturation, including, without limitation glycidyl acrylate, glycidyl methacrylate (GMA), glycidyl methyl methacrylate, 4-hydroxybutylacrylate glycidyl ether , 3, 4-epoxy-cyclohexyl methyl acrylate, and 3, 4-epoxycyclohexyl methyl methacrylate. Epoxides within this sub-group may be reacted with the acid functional intermediates, as described above, to yield macromonomers having (meth)acrylate unsaturation. These macromonomers may be subsequently polymerized with other conventional acrylic monomers (as described below), to yield resins suitable for dispersion into water, including alkyd acrylic resins.

### VI. Hydroxyl Functional Resin Intermediates

In a particularly useful embodiment of the invention, the reaction product of an acid functional intermediate, derived from acidolysis of an engineered polyester, with a polyhydroxyl reactant and, optionally, a polyacid, may yield a hydroxyl functional resin intermediate having at least one free hydroxyl group which may subsequently be reacted with one or more coupling agents having ethylenic unsaturation. Particularly useful coupling agents include epoxides, anhydrides, isocyanates, and silanes that have ethylenic unsaturation. Reaction of the free hydroxyl groups with one or more coupling agents may introduce polymerizable ethylenic unsaturation onto the macromonomer, allowing for subsequent polymerization with other conventional ethylenically unsaturated monomers, such as (meth)acrylic and vinylic monomers.

Useful epoxide coupling agents having (meth)acrylic unsaturation include those identified in the previous section, exemplified by GMA.

Useful anhydride coupling agents include acrylic anhydride and methacrylic anhydride; methacrylic anhydride being particularly useful because of the methacrylic acid which is a reaction byproduct and can later be used as a monomer in the acrylic polymerization.

Useful isocyanate coupling agents containing free radical polymerizable unsaturation include meta isopropenyl dimethylbenzyl isocyanate (m-TMI, available from Cytec) and isocyanatoethyl methacrylate.

Useful silane coupling agents include vinyltrimethoxysilane, vinyltriethoxysilane, methacryloxy-propyltrimethoxysilane, methacryloxypropyltris(methoxyethoxy) silane, vinyl tris(methoxyethoxy) silane and vinyltriacetoxysilane.

### VII. Acrylic Polymerization of Ethylenically Unsaturated Macromonomers

According to one embodiment of the present invention, the reaction product of the hydroxyl functional resin intermediate described above and one or more coupling agents, may yield a macromonomer having ethylenic unsaturation, which may subsequently be polymerized with other conventional ethylenically unsaturated monomers according to one or more embodiments of the process described in further detail below and in the examples. According to another embodiment of the invention, the reaction product of the acid functional intermediate and an ethylenically unsaturated epoxide coupling agent may be polymerized with other conventional ethylenically unsaturated monomers according to one or more embodiments of the process described in further detail below and in the examples. The reaction product thereof, may be useful as a primary or secondary resin in a coating. The resin resulting from the polymerization with ethylenically unsaturated monomer(s) may be referred to herein as the modified resin.

Exemplary monomers suitable for use in polymerization include those acrylic, vinylic and other ethylenically unsaturated materials taught to be useful when reacted with unsaturated acids, such as acrylic acid, methacrylic acid and itaconic acid. Suitable vinyl monomers are, for example, alkylacrylates, alkylmethacrylates, hydroxyalkyl acrylates, hydroxyalkyl methacrylates, acrylamides, methacrylamides, vinyl aromatic hydrocarbons, vinyl aliphatic hydrocarbons or mixtures thereof. While acrylic acid and methacrylic acid are preferred ethylenically unsaturated carboxylic acids, other suitable ethylenically unsaturated carboxylic acid monomers may be used such as beta-carboxyethyl acrylates, itaconic acid, crotonic acid, maleic acid, and half esters of maleic and fumaric acids, such as butyl hydrogen maleate and ethyl hydrogen fumarate, in which one carboxyl group is esterified with an alcohol. Examples of other ethylenically unsaturated monomers which can be used for making the vinyl polymer include the alkyl acrylates, such as methyl acrylate, ethyl acrylate, butyl acrylate, propyl acrylate, 2-ethylhexyl acrylate and isobomyl acrylate; the alkyl methacrylates, such as methyl methacrylate, butyl methacrylate, isobutyl methacrylate, 2-ethylhexyl methacrylate, decyl methacrylate, lauryl methacrylate, acetoacetoxyethyl methacrylate, dimethylaminoethyl methacrylate, and allyl methacrylates and isobomyl methacrylate; hydroxyalkyl acrylates and methacrylates such as hydroxyethyl acrylate, hydroxypropyl acrylate, hydroxyethyl methacrylate, hydroxypropyl methacrylate; acrylamides and methacrylamides, diacetone acrylamide, and unsaturated nitriles such as acrylonitrile, methacrylonitrile, and ethacrylonitrile. Other ethylenically unsaturated monomers (vinyl monomers) that can be used in addition to the acrylic monomers include: vinyl aromatic hydrocarbons (such as styrene, alpha-methyl styrene, and vinyl toluene); and vinyl aliphatic hydrocarbons such as vinyl acetate and vinyl versatates.

A free radical producing polymerization initiator may be employed. Examples of initiators include, but are not limited to: peroxyesters such as tertiary-butyl perbenzoate or tertiary-amyl perbenzoate; azo compounds such as alpha, alpha'-azobis(isobutyronitrile); peroxides such as benzoyl peroxide, hydroperoxides such as cumene hydroperoxide or tertiary-butyl hydroperoxide; peracetates such as tertiary butyl peracetate; percarbonates such as isopropyl percarbonate, peroxycarbonates such as butyl isopropyl peroxy carbonate, and similar compounds. The quantity of initiator employed can be varied considerably; however, in most instances, it is desirable to utilize from about 0.1 to about 10 percent by weight based on the weight of ethylenically unsaturated monomers used. Where desired, a chain modifying agent or chain transfer agent can be added to the polymerization mixture for control of the molecular weight of the resulting resin. Examples of such agents include the mercaptans, such as tertiary dodecyl mercaptan, dodecyl mercaptan, octyl mercaptan, hexyl mercaptan, and 2-mercaptoethanol, etc.

The polymerization reaction may be carried out in the presence of one or more solvents. Conventional solvents such as n-butyl acetate, toluene, xylene or methyl propyl ketone can be used in the polymerization, especially if, after polymerization, the solvent is distilled off before dispersion of the product resin into water. More water-miscible solvents such as propylene glycol monomethyl ether (PM Solvent), ethylene glycol monobutyl ether and propylene glycol monobutyl ether (PnB Solvent) may be used. However, in some embodiments it is desirable to use, as a solvent, one or more of the drying or semi-drying oils, preferably those having an iodine number greater than 120. Drying or semi-drying oils or a combination thereof, may be used in place of all or part of the solvent. Soybean oil is a particularly useful solvent.

Conventionally, polymerization of ethylenically unsaturated monomers occurs in a reaction chamber, which is charged with the monomer(s), solvent(s), and initiator. According to one embodiment of the present invention, the reaction chamber may be provided with a port adapted for attaching a vacuum suitable for distilling volatile solvents from the reaction chamber selectively during and after polymerization. By providing a reaction chamber with a vacuum source suitable for removing volatile solvents from the chamber, conventional volatile organic solvents, including n-butyl acetate, toluene, PM and PnB, solvents may be used during polymerization. Butyl acetate can be particularly useful in the reaction chamber as a way to wash the walls of the chamber of monomer that has been deposited thereon. This monomer build-up, if allowed unabated, can result in undesirable polymerization of the monomer on the walls of the chamber, rather than in the reaction mixture. This, in turn, may adversely affect the monomer concentration in the reaction mixture and composition of the polymer, and may hamper cycle time as the reaction chamber must be ridded of this build up before subsequent batches can be processed. Using a volatile organic solvent, such as n-butyl acetate during polymerization, may reduce monomer build-up as the solvent condenses on the chamber ceiling and walls and washes back down into the reaction mixture carrying monomers with it. Subsequent vacuum distillation of the reaction chamber may remove up to substantially all of the n-butyl acetate (and other volatile organic solvents) that would otherwise contribute to high VOC levels if left. In some embodiments, distillated solvents may be recycled for use in subsequent reactions.

Vacuum distillation may be used selectively during the polymerization process so as to remove the volatile solvents selectively.

The amount of monomeric materials used in conjunction with the ethylenically unsaturated resin intermediates or modified acid functional intermediates, may be in the range of about 10% to about 80%, and more preferably, about 20% to about 60% based on total modified resin solids. Incorporation of a sufficient amount of acid-functional monomer material, with or without surfactants, will enable the final polymer products to be reducible in water or other aqueous systems when sufficiently neutralized as discussed below. The amount of acid functional monomer will vary depending on reaction variables and use of surfactants; however, in some embodiments, it is useful to use sufficient acid functional monomer to provide the modified resin with an acid value of between about 20 and about 35. In other embodiments, it may be sufficient for the modified resin to have an acid value below 20, though surfactants may be necessary to satisfactorily disperse the modified resin in water.

A method of producing a water dispersible resin may include the steps of reacting in a reaction vessel, in the presence of at least one solvent, a resin intermediate and an ethylenically unsaturated coupling agent, to produce an ethylenically unsaturated macromonomer, wherein the resin intermediate is the reaction product of (i) an acid functional intermediate; and (ii) an hydroxyl-functional reactant. The acid functional intermediate may be the acidolysis reaction product of an engineered polyester with an acid or anhydride functional materials and blends thereof. The method may further include adding at least one acid functional ethylenically unsaturated monomer to the reaction vessel and, as necessary, an initiator suitable for initiating reaction of the ethylenically unsaturated macromonomer and the acid functional ethylenically unsaturated monomer.

In another embodiment, a method of producing a water dispersible resin may include the steps of reacting in a reaction vessel, in the presence of at least one solvent, a resin intermediate and an ethylenically unsaturated coupling agent, to produce an ethylenically unsaturated macromonomer, wherein the resin intermediate is the reaction product of (i) an acid functional intermediate; and (ii) an amine-functional reactant. The acid functional intermediate may be the acidolysis reaction product of an engineered polyester with an acid or anhydride functional materials and blends thereof. The method may further include adding at least one acid functional ethylenically unsaturated monomer to the reaction vessel and, as necessary, an initiator suitable for initiating reaction of the ethylenically unsaturated macromonomer and the acid functional ethylenically unsaturated monomer.

In some embodiments, the engineered polyester may be a biorenewable polyester, which may be polylactic acid.

In some embodiments, the acid may be a fatty acid, which may be soya fatty acid.

While it is contemplated in some embodiments that the ethylenically unsaturated macromonomer will be reacted with at least one acid functional ethylenically unsaturated monomer, it may be understood that a blend of ethylenically unsaturated monomers may be used, which, in some embodiments, may include at least one acid functional monomer.

In some embodiments, the blend of all ethylenically unsaturated components (macromonomer and monomers) may comprise from 10 to about 90 % of total monomer weight of the ethylenically unsaturated macromonomer.

In some embodiments, from 10 to 50 % of total resin weight may be derived directly from the engineered polyester and fatty acid. In other embodiments, from 10 to 25%.

According to another embodiment, a method of producing a resin may include the steps of reacting in a reaction vessel, in the presence of at least one solvent, a resin intermediate and at least one ethylenically unsaturated monomer. The resin intermediate may comprise the reaction product of an acid functional intermediate and an epoxide functional reactant having methacrylic or acrylic unsaturation. The acid functional intermediate may comprise the acidolysis reaction product of an engineered polyester with an acid or anhydride functional material or blend thereof. The method may further include adding an initiator to the reaction vessel suitable for initiating reaction of the resin intermediate and the ethylenically unsaturated monomer and reacting, under suitable conditions, the resin intermediate and ethylenically unsaturated monomer.

The ethylenically unsaturated monomer may be acid functional where it is desirable for the resin to be water dispersible. In some embodiments, the coupling agent may be selected to give off an acid functional ethylenically unsaturated monomer, as a by-product of the reaction of the coupling agent and the resin intermediate.

It will be recognized by one of ordinary skill in the art that polymerization may involve multiple feed and processing stages over a period time.

In some embodiments, the solvent may comprise an oil selected from the drying and semi-drying oils. In other embodiments, the solvent may comprise a volatile organic solvent. In still other embodiments, the solvent may comprise a blend of drying and semi-drying oils and organic solvents.

In some embodiments, the processes described herein may further include the step of distilling substantially all volatiles from the reaction chamber.

In some embodiments, the distillation means for distilling the solvents from the reaction chamber may be vacuum distillation.

### VIII. Dispersion of Polymer into Water

The production of the dispersions of this invention is effected with a dispersing method to incorporate the polymer, from section VII, into water. In the dispersion process of the present invention, the polymer resin is initially liquefied by heating the resin to at least its melting or softening point, and more preferably, to a temperature of at least 5° C above its flow point so the polymer maintains a molten and flowable state, but below the decomposition temperature of the polymer. Typically, the polymer resin will soften or melt in the temperature range from about 120° C to about 140° C. A separate vessel of water, containing a base for neutralization of the carboxylic acids on the polymer, may be heated to between 20° C and 70° C. Alternatively, depending on the boiling point of the base, it may be added to the polymer melt in the reaction vessel before dispersion. The base can be an amine compound or an alkali hydroxide. Water solubility or water dilutability may be given to the resin by effecting neutralization of acidic groups, such as carboxyl, with a basic material, e.g. triethylamine, monoisopropylamine, diisopropylamine, diethylene triamine, triethylenetetramine, monoethanolamine, diethanolamine, triethanolamine, monoisopropanolamine, diisopropanolamine, N,N-dimethylethanolamine, morpholine, methyl morpholine, piperazine, ammonium hydroxide, sodium hydroxide, potassium hydroxide and the like, with or without surfactants. Preferably, the base may be a tertiary amine. Typically enough base is added to neutralize some of the acid on the polymer. The water phase and the polymer phase are brought into contact with one another and immediately dispersed in a high shear mill or a homogenizer. The high shear may be employed to break the polymer melt into particles down to a sub-micron level. The process can be continuous or in batch mode where the tank or mixing vessel contains the water phase. Once the polymer is dispersed in water, the pH is adjusted to 7.6-8.2 and the percent solids are adjusted to 35-55% by weight. Preferably, the resulting polymer dispersion has a volatile organic level of less than 10% based on solids, and in other embodiments less than 5%, and in still other embodiments, less than about 3.5%. Volatile organic levels of between greater than 0% to about 3.5%, based on solids may be obtained in some embodiments by careful selection of the neutralizing base. The polymer dispersion may have an acid number of less than 30.

In some embodiments, it may be desirable to reduce the amount of residual monomer in the dispersion by means of a redox chase. Suitable oxidizers may include ammonium persulfate, cumene hydroperoxide, t-butyl hydroperoxide, hydrogen peroxide, potassium persulfate, and sodium persulfate. Suitable reducers may include sodium metabisulfite, sodium thiosulfate, sodium formaldehyde sulfoxylate, sodium hydrosulfite, sodium bisulfite, hydroxymethanesulfonic acid, iron (II) sulfate, formic acid, ammonium bisulfate, lactic acid, ascorbic acid, erythorbic acid, and isoascorbic acid.

The powdered oxidizers and reducers may be dissolved separately in water and fed into the dispersion tank during or after the milling and dispersion of the polymer melt into the basic water. The liquid oxidizers can be metered into the dispersion neat or dissolved in solvent. Alternatively, if the boiling point and decomposition point is high enough, the liquid oxidizers or the solutions of oxidizers may be added to the hot polymer melt in the polymerization chamber after distillation. The polymer melt with the oxidizer can then be milled with the basic water in which the reducer was previously added and dissolved.

Surfactants may optionally be used during water dispersion. If used, suitable surfactants may include anionic and nonionic surfactants such as, but not limited to, sorbitan surfactants, sodium lauryl sulfate, sodium dodecylbenzene sulfonate (Rhodacal DS-10), nonylphenol ethoxylates (such as IGEPAL® CO-Series available from Rhodia, Cranberry, NJ), octylphenol ethoxylates (such as IGEPAL® CA-Series available from Rhodia, Cranberry, NJ), polyether polyols (such as PLURONIC® or TETRONIC® available from BASF Corporation, Mt. Olive, NJ), and acetylenic alcohols (such as SURFYNOL® available from Air Products, Allentown, PA). The surfactant, if present, is preferably about 0.1% to about 5% of the total weight of the polymer. In some embodiments of the present invention, adequate water dispersibility and stable dispersions may be achieved without resorting to the use of surfactants. In other embodiments, the surfactants may also include functionality to aid in curing the dispersions during film formation to minimize water sensitivity of the final coating.

In some embodiments the water dispersible alkyd acrylic resin has greater than 20%, and in other embodiments greater than 30% and in still further embodiments, greater than 50% of its weight derived directly from biorenewable starting materials, namely, the engineered polyester(s) and, when used, fatty acids.

### IX. COATING COMPOSITIONS

The above described polymer dispersions can be used by themselves as a sole binder, or in combination with a latex or alkyd emulsion as a film forming resin in coating compositions.

Examples of latex compositions in which the polymer dispersion products may be blended include, for example, those based on resins or binders of vinyl acrylic, styrene acrylic, all acrylic, copolymers of acrylonitrile wherein the comonomer may be a diene like isoprene, butadiene or chloroprene, homopolymers and copolymers of styrene, homopolymers and copolymers of vinyl halide resins such as vinyl chloride, vinylidene chloride or vinyl esters such as vinyl acetate, vinyl acetate homopolymers and copolymers, copolymers of styrene and unsaturated acid anhydrides like maleic anhydrides, homopolymers and copolymers of acrylic and methacrylic acid and their esters and derivatives, polybutadiene, polyisoprene, butyl rubber, natural rubber, ethylene-propylene copolymers, olefins resins like polyethylene and polypropylene, polyvinyl alcohol, carboxylated natural and synthetic latexes, polyurethane and urethane-acrylic hybrid dispersions, epoxides, epoxy esters and other similar polymeric latex materials. The ratio of the polymers of the present invention to the latexes in a coating composition covers a wide range depending on the desired properties of the final coating product and intended uses. For example, the product of Section VIII. of the present invention may be present from about 2 weight percent to about 100 weight percent of the total binder.

The coatings of this invention can be cured oxidatively with metal driers with or without added solvents or co-solvents. These coatings, whether containing or not containing oxidative moieties, can also be cured by the addition of crosslinking agents cured either at room temperature or at elevated temperatures. Metal driers can include cobalt, zirconium, or calcium carboxylates, for example. Crosslinking agents can include isocyanates, blocked isocyanates, melamine-formaldehyde resins, urea-formaldehyde resins, aziridines, titanates, carbodiimides, epoxides, epoxy resins, and other crosslinkers known to those skilled in the art. Aqueous dispersions of the isocyanates, blocked isocyanates, melamine-formaldehyde resins, urea-formaldehyde resins, aziridines, titanates, carbodiimides, epoxides, epoxy resins, and other crosslinkers can also be used. Crosslinking agents can be added to the dispersions of this invention or to blends of these dispersions with latexes or other polymers known to one skilled in the art.

The coatings of this invention may typically be applied to any substrate such as metal, plastic, wood, paper, ceramic, composites, dry wall, and glass, by brushing, dipping, roll coating, flow coating, spraying or other method conventionally employed in the coating industry.

Opacifying pigments that include white pigments such as titanium dioxide, zinc oxide, antimony oxide, etc. and organic or inorganic chromatic pigments such as iron oxide, carbon black, phthalocyanine blue, etc. may be used. The coatings may also contain extender pigments such as calcium carbonate, clay, silica, talc, etc. as well as other conventional additives used in conventional paints.

The following examples have been selected to illustrate specific embodiments and practices of advantage to a more complete understanding of the invention. Unless otherwise stated, "percent" is percent-by-weight, PVC is pigment volume concentration, NVM is percent non-volatile mass, Mn is number average molecular weight, Mw is weight average molecular weight, Cps is centipoise, Pd is molecular weight polydispersity, and acid value is milligrams KOH per gram of sample.

### EXAMPLE I:

### ACIDOLYSIS OF PLA WITH TALL OIL FATTY ACID AND SUBSEQUENT REPOLYMERIZATION TO FORM ALKYD

A 3-liter, 4-necked round bottom flask is equipped with inert gas, a mechanical stirrer, Barrett tube and Friedrich's condenser and charged with 122.74 grams (g) of polylactic acid pellets (Natureworks 2002D), 497.48g of tall oil fatty acid, and 0.99g of dibutyl tin oxide catalyst. The contents are heated to 260°C (500°F) under stirring and the temperature held until all contents are melted. The solution is cooled to 182°C (360°F) and 80.19g of isophthalic acid and 139.6 g of trimethylolpropane are added. The contents are heated to 193°C (380°F) until most of the water is given off and removed and then the mixture is gradually heated to 238°C (460°F) and held for an acid value of about 10. Heat is removed and the contents filtered. The final alkyd product had an NVM of 99.1 %, viscosity of 1500cps (using Brookfield LVT#3 at 25°C, 30 rpm), final acid value of 4.8, Mw of 3919, Mn of 1868 and Pd of 2.10.

### EXAMPLE IIA:

### ACIDOLYSIS OF PLA WITH SOYA FATTY ACID AND SUBSEQUENT REPOLYMERIZATION TO FORM ALKYD ACID INTERMEDIATE

A 2-liter, 4-necked round bottom flask is equipped with inert gas, a mechanical stirrer, Barrett tube and Friedrich's condenser and charged with 155g of polylactic acid, 621.88g of soya fatty acid, 1.25g of dibutyl tin oxide catalyst. The contents are heated to 260°C (500°F) under stirring and the temperature is held until all contents have melted. The solution is cooled to 182°C (360°F) and 156.25g of trimethylolethane and 100.25g of isophthalic acid are added. The contents are heated to 193°C (380° F) until most of the water is given off and collected and then the mixture is gradually heated to 238°C (460°F) and held for an acid value of between about 8 and about 10. Heat is removed and the contents filtered. The final alkyd product has an NVM of 98.3%, viscosity of 11,200cps (using Brookfield LVT#3 at 25°C, 12 rpm), acid value of 6.6, Mz of 4464, Mw of 3165, Mn of 1782 and Pd of 1.78.

### EXAMPLE IIB:

### ACIDOLYSIS OF PLA WITH SOYA FATTY ACID AND SUBSEQUENT REPOLYMERIZATION TO FORM ALKYD ACID INTERMEDIATE

A 2-liter, 4-necked round bottom flask is equipped with inert gas, a mechanical stirrer, Barrett tube and Friedrich's condenser and charged with 153.75g of polylactic acid, 621.88g of soya fatty acid, 1.25g of dibutyl tin oxide catalyst. The contents are heated to 260°C (500°F) under stirring and the temperature is held until all contents have melted (approximately 1 hour). The solution is cooled to 182°C (360°F) and 173g of trimethylolethane are added and the mixture is held for approximately 1 hour. 50g of isophthalic acid are added. The contents are heated to 193°C (380° F) until most of the water is given off and collected and then the mixture is gradually heated to 238°C (460°F) and held for an acid value of between about 8 and about 10. Heat is removed and the contents filtered. The final alkyd has an NVM of 98.5%, viscosity of 485 cps (using Brookfield LVT#3 at 25°C, 30 rpm), acid value of 4.49, Mz of 4464, Mw of 1555, Mn of 1191 and Pd of 1.30.

### EXAMPLE III:

### PREPARATION OF LOW VOC ACRYLATED ALKYD RESIN INTERMEDIATE

A 2-liter, 4-necked round bottom flask is equipped with inert gas, a mechanical stirrer, Barrett tube and Friedrich's condenser and charged with 115.31g of polylactic acid, 465.75g of linoleic acid (Pamolyn 200), 0.85g of dibutyl tin oxide catalyst. The contents are heated to 260°C (500°F) under stirring and the temperature is held until all contents have melted (approximately 1 hour). The solution is cooled to 120°C (248°F) and 0.94g of dimethylbenzylamine (BDMA) catalyst and 0.06g of a free radical inhibitor (IRGONOX 1076, Ciba) are added. Over a period of approximately 4 hours, 236.5g of glycidyl methacrylate (GMA) are added. The contents are held at about 120°C (248°F) for an acid value of less than 10, with suitable adjustment, as necessary, of GMA feed. The mixture is cooled to 70°C (158°F) and 0.03g of inhibitor are added. The final filtered macromonomer product has an NVM of 95%, viscosity of 190 cps (using Brookfield LVT#3 at 25°C, 30 rpm), acid value of 5.8, Mw of 6239, Mn of 756 and Pd of 8.3.

### EXAMPLE IV

### PREPARATION OF ETHYLENICALLY UNSATURATED ALKYD RESIN INTERMEDIATE WITH SUBSEQUENT POLYMERIZATION

A 5-liter round bottom flask is equipped with inert gas, a mechanical stirrer, Barrett tube and Friedrich's condenser is charged with 782g of the alkyd acid intermediate of Example **IIB.** The charge is heated to 115°C (239°F) followed by addition of 0.2g of N,N-dimethylbenzylamine and then 5.00g of methacrylic anhydride. The reaction vessel is then heated to about 138°C (280°F). The mixture is held for 15 minutes to make an alkyd macromonomer intermediate. 55g of propylene glycol monobutyl ether is added to the reaction vessel followed by a 3-hour feed at 138°C (280°F) of 538g of methyl methacrylate, 47g of acrylic acid, 176g of ethyl hexyl acrylate and 9.1g of t-butyl perbenzoate. Upon complete addition of both feeds, a second oxidizer (chase, to reduce the concentration free monomers) of 9.50g t-butyl perbenzoate in 26g of propylene glycol monomethyl ether is fed into the reaction vessel over a 3.0 hour time period. Subsequently, the solvent and volatiles are distilled off by bubbling nitrogen through the resin dispersion at 138°C (280°F) until the NVM is >98%.

### EXAMPLE V:

### DISPERSION IN WATER TO MAKE BIORENEWABLE ALKYD ACRYLIC DISPERSION

The dispersion of the product of Example IV into water is produced with a high shear rotor stator mill. The composition of Example IV is maintained at 138°C (280°F), and is added slowly to the mill already charged with 1900g of deionized water, 57g of triethylamine, and 7g of a defoamer, at room temperature. The mixture is mixed until the composition of Example IV is completely incorporated and finely dispersed. The mixture is adjusted as necessary to maintain a pH less than about 8. NVM of 42.68%, a pH of 7.86, and a viscosity of 828 cps (Brookfield LVT#3 at 25°C, 30 rpm at 25°C). The resulting polymer dispersion has volatile organic level of 5% on solids.

### EXAMPLE VI:

### PREPARATION OF AN AQUEOUS COATING COMPOSITION USING THE POLYMER DISPERSION OF EXAMPLE V AS A SOLE BINDER

A suitable coating composition may be made from a composition comprising the dispersion product of Example V. An exemplary composition may be formulated according to the composition set forth below.

| Material | Weight % |
|---|---|
| Dispersion of Example V | 62.24 |
| Water | 18.67 |
| Titanium Dioxide | 14.23 |
| Defoamers¹ | 0.51 |
| Plasticizer² | 0.30 |
| Colloidal Clay³ | 0.15 |
| Pigment Dispersant⁴ | 0.37 |
| Fumed Silica | 0.20 |
| Thickener⁵ | 0.99 |
| Dimethylethanolamine-anhydrous | 0.46 |
| Propylene Glycol monobutyl Ether solvent | 0.71 |
| Driers⁶ | 1.07 |
| Drier Accelerator⁷ | 0.05 |
| Benzisothiazolone Biocide | 0.05 |

| | |
|---|---|
| 1 - Sher-Defoam available from The Sherwin-Williams Company and Byk 024 available from Byk-Chemie 2 - Benzoflex B-50 available from Genovique, Rosemont, IL 3 - Laponite RD available from Rockwood Additives Limited 4 - Surfynol CT-324 available from Air Products and Chemicals, Inc. 5 - Acrysol RM-2020 NPR, RM-825 available from Rohm & Haas. 6 - 5% Calcium Hydro CEM drier, 5% Cobalt Hydrocure II drier, 12% Zirconium Hydro CEM available from OM Group, Inc. 7 - Dri-RX HF 2,2'-bipyridyl solution available from OM Group, Inc. | |

### EXAMPLE VII

### PREPARATION OF PET ALKYD WITH SUBSEQUENT CONVERSION to ETHYLENICALLY UNSATURATED ALKYD MACROMONOMER WITH SUBSEQUENT POLYMERIZATION AND DISPERSION INTO WATER TO MAKE AN ALKYD ACRYLIC DISPERSION

A suitably sized reactor may be equipped with inert gas, mechanical stirrer, condenser and trap and charged with 18845g of high content soya fatty acid and heated to 204°C (400°F). To the charge at 204°C (400°F) may be added 37g of dibutyl tin oxide catalyst and 9285g of polyethylene terephthalate pellets (Eastman). The temperature may be raised to 260°C (500°F) and held for 1-hour. The acid functional intermediate may be cooled to 182°C (360°F) and then 2980g of isophthalic acid, 4800g of trimethylolethane, and 500g of methyl propyl ketone may be added. The reaction may be heated to 196°C (385°F) and held for 45-minutes and slowly heated to 238°C (460°F) until an acid value of 8 is obtained. Upon cooling, the PET alkyd may have a final acid value of 7.3, NVM of 98.2% and viscosity of 98,300 cps (using Brookfield LVT#2 at 25°C, 30 rpm).

A suitably sized reactor may be equipped with inert gas, mechanical stirrer, condenser, trap monomer inlet, initiator inlet and capability for vacuum distillation and charged with 3921g of the PET alkyd formed according to the process described in the previous paragraph, 196g of soybean oil, 288g of butyl acetate and 58.8g of methyl propyl ketone. The charge may be heated to 115°C (239°F) and then 29.8g of methacrylic anhydride may be added, followed by 1.88g of N,N-dimethylbenzylamine and 141.5g of butyl acetate and then heated to 138°C (280°F) to make the PET alkyd macromonomer. After holding at 138°C (280°F) for 30-minutes, an initiator feed may be started 10-minutes before the 180-minute monomer feed. The 180-minute initiator feed may comprise 45g of t-butyl perbenzoate and 199g of butyl acetate. The monomer feed may comprise 237g of acrylic acid, 2701 g of methyl methacrylate, 882g of ethyl hexyl acrylate and 136g of butyl acetate. After the feeds may be added and held at 138°C (280°F) for 30-minutes, 11.2g of t-butyl perbenzoate chase may be added. After another 30-minute hold a second chase of 11.2g of t-butyl perbenzoate may be added, after another 30-minute hold a third chase of 11.2g of t-butyl perbenzoate may be added and the refluxing butyl acetate may be allowed to collect in the trap. After the fourth 30-minute hold, another chase of 11.2g of t-butyl perbenzoate may be added and vacuum may be applied slowly to avoid foaming the reactor contents into the condenser. After about 4-hours of vacuum distillation, the NVM of the polymer melt may be greater than 99%. The vacuum may be stopped and, to the polymer melt at 138°C (280°F), may be added 24.2g of 70% t-butyl hydroperoxide and 24.2g of cumene hydroperoxide while a dispersion tank may be charged with 9500g of deionized water at 70°C (158°F), 193g of N,N-dimethylethanolamine, 35.4g of Foamaster NDW defoamer (Cognis, Cincinnati, Ohio) and 24.2g erythorbic acid. Between the reactor outlet and the dispersion tank may be positioned a high-speed mill with a re-circulation loop to assist dispersion into the 60-70°C (140°F - 158°F) water. The reactor may be pressurized with nitrogen and the polymer melt pushed through the mill to mix with the re-circulating contents of the dispersion tank. After the dispersion is complete, the contents of the dispersion tank may be re-circulated through the mill for several hours while the pH is adjusted, such as with an additional 15g of N,N-dimethylethanolamine. The final filtered PET alkyd acrylic dispersion may have an NVM of 42.8, pH of 7.71, viscosity of 924 cps (using Brookfield LVT#3 at 25°C, 30 rpm) and particle size of 128.9 nanometers.

## Claims

1. A water dispersible resin formed from the reaction product of a monomer blend comprising:
a. An ethylenically unsaturated macromonomer, formed from a process comprising the steps of:
i. producing an acid functional intermediate as the acidolysis reaction product of an engineered polyester and at least one member of the group consisting of acid and anhydride functional materials and blends thereof, optionally in the presence of a catalyst;
ii. producing a resin intermediate as the reaction product of the acid functional intermediate produced in (i) with an hydroxyl-functional reactant, optionally in the presence of a polyacid; and
iii. reacting the resin intermediate produced in (ii) with an ethylenically unsaturated coupling agent; and
b. at least one acid functional ethylenically unsaturated monomer.

2. The resin of claim 1, wherein the engineered polyester is a biorenewable polyester, preferably polylactic acid, or wherein the engineered polyester is selected from the group consisting of polyalkylene terephthalates and polyalkylene naphthalates.

3. The resin of claim 1, wherein the acid functional intermediate comprises the acidolysis reaction product of an engineered polyester and at least one fatty acid, preferably soya fatty acid.

4. The resin of claim 2, wherein the ethylenically unsaturated coupling agent is selected from the group consisting of isocyanate coupling agents, anhydride coupling agents and silane coupling agents.

5. resin of claim 1, wherein the ethylenically unsaturated coupling agent is an epoxide coupling agent.

6. The resin of claim 1, wherein the monomer blend comprises from 10 to about 90 % ethylenically unsaturated macromonomer, with respect to total monomer weight, or wherein 10 to 50 % of total resin weight derives directly from the biorenewable polyester and soya fatty acid, preferably
wherein 10 to 25% of total resin weight derives directly from the biorenewable polyester and soya fatty acid.

7. A resin formed from the reaction product of a monomer blend comprising:
a. An ethylenically unsaturated macromonomer, formed from a process comprising the steps of:
i. producing an acid functional intermediate as the acidolysis reaction product of an engineered polyester and at least one member of the group consisting of acid and anhydride functional materials and blends thereof, optionally in the presence of a catalyst;
ii. producing a resin intermediate as the reaction product of the acid functional intermediate produced in (i) with an epoxide functional reactant having methacrylic or acrylic unsaturation; and
b. at least one *other* ethylenically unsaturated monomer.

8. The resin of claim 13, wherein the engineered polyester is a biorenewable polyester, which is preferably selected from the group consisting of polylactic acid, polyhydroxyalkanic acids, copolymers of polylactic acid with polyhydroxyalkanic acids, and blends thereof, or
wherein the acid functional intermediate is produced as the acidolysis reaction product of polylactic acid and at least one acid comprising a fatty acid, wherein the fatty acid is preferably a vegetable fatty acid or an unsaturated fatty acid.

9. The resin of claim 13, wherein the epoxide functional reactant having methacrylic or acrylic unsaturation is glycidyl methacrylate, or
wherein the at least one other ethylenically unsaturated monomer is acid functional.

10. A method of producing a water dispersible resin comprising the steps of:
a. providing in a reaction vessel at least one solvent, a resin intermediate and an ethylenically unsaturated coupling agent, wherein the resin intermediate is the reaction product of
(i) an acid functional intermediate; and
(ii) an hydroxyl-functional reactant,
wherein the acid functional intermediate is the acidolysis reaction product of an engineered polyester with a member of the group consisting of acid and anhydride functional materials and blends thereof;
b. reacting the resin intermediate and ethylenically unsaturated coupling agent to produce an ethylenically unsaturated macromonomer;
c. adding at least one acid functional ethylenically unsaturated monomer to the reaction vessel;
d. adding an initiator to the reaction vessel suitable for initiating reaction of the ethylenically unsaturated macromonomer and at least one acid functional ethylenically unsaturated monomer.

11. The method of claim 10, wherein the solvent comprises an oil selected from the drying and semi-drying oils.

12. A method of producing a water dispersible resin comprising the steps of:
a. providing in a reaction vessel at least one solvent, a resin intermediate and at least one ethylenically unsaturated monomer, wherein the resin intermediate is the reaction product of
(i) an acid functional intermediate; and
(ii) an epoxide functional reactant having methacrylic or acrylic unsaturation;
wherein the acid functional intermediate is the acidolysis reaction product of an engineered polyester with a member of the group consisting of acid and anhydride functional materials and blends thereof
b. adding an initiator to the reaction vessel suitable for initiating reaction of the resin intermediate and the at least one acid functional ethylenically unsaturated monomer, and
c. reacting the resin intermediate and at least one ethylenically unsaturated monomer.

13. The method of claim 12, wherein the acid functional intermediate is the acidolysis reaction product of a biorenewable polyester with a fatty acid, or
wherein the acid functional intermediate is the acidolysis reaction product of a polylactic acid with avegetable fatty acid, preferably
wherein the epoxide functional reactant is glycidyl methacrylate

14. The method of claim 10 or 13, wherein the solvent comprises soybean oil, or
wherein the solvent comprises a volatile organic solvent, or wherein the method further comprises the step of distilling substantially all volatiles from the reaction chamber by vacuum distillation after addition of the initiator.

15. The method of claim 14, wherein the at least one ethylenically unsaturated monomer is selected from the group consisting of acrylic monomers and methacrylic monomers and blends thereof.

## Patentansprüche

1. Ein wasserdispergierbares Harz, gebildet aus dem Reaktionsprodukt aus einer Monomerenmischung, umfassend:
a. ein ethylenisch ungesättigtes Makromonomer, gebildet durch ein Verfahren, umfassend die Schritte:
i. Erzeugen eines säurefunktionellen Zwischenprodukts als das Acidolysereaktionsprodukt aus einem technischen Polyester und wenigstens einem Element aus der Gruppe, bestehend aus säure- und anhydridfunktionellen Materialien und Mischungen davon, gegebenenfalls in Gegenwart eines Katalysators,
ii. Erzeugen eines Harz-Zwischenprodukts als das Reaktionsprodukt des in (i) erzeugten säurefunktionellen Zwischenprodukts mit einem hydroxyfunktionellen Reaktanden, gegebenenfalls in Gegenwart einer Polysäure, und
iii. Umsetzen des in (ii) erzeugten Harz-Zwischenprodukts mit einem ethylenisch ungesättigten Kupplungsmittel, und
b. wenigstens ein säurefunktionelles ethylenisch ungesättigtes Monomer.

2. Das Harz nach Anspruch 1, wobei der technische Polyester ein biologisch erneuerbarer Polyester ist, vorzugsweise Polymilchsäure, oder wobei der technische Polyester ausgewählt ist aus der Gruppe, bestehend aus Polyalkylenterephthalaten und Polyalkylennaphthalaten.

3. Das Harz nach Anspruch 1, wobei das säurefunktionelle Zwischenprodukt das Acidolysereaktionsprodukt aus einem technischen Polyester und wenigstens einer Fettsäure, vorzugsweise Sojafettsäure, umfasst.

4. Das Harz nach Anspruch 2, wobei das ethylenisch ungesättigte Kupplungsmittel ausgewählt ist aus der Gruppe, bestehend aus Isocyanat-Kupplungsmitteln, Anhydrid-Kupplungsmitteln und Silan-Kupplungsmitteln.

5. Das Harz nach Anspruch 1, wobei das ethylenisch ungesättigte Kupplungsmittel ein Epoxid-Kupplungsmittel ist.

6. Das Harz nach Anspruch 1, wobei die Monomerenmischung 10 bis etwa 90% ethylenisch ungesättigtes Makromonomer umfasst, bezogen auf das Monomergesamtgewicht, oder wobei 10 bis 50% des Harzgesamtgewichts direkt aus dem biologisch erneuerbaren Polyester und Sojafettsäure stammen, vorzugsweise wobei 10 bis 25% des Harzgesamtgewichts direkt aus dem biologisch erneuerbaren Polyester und Sojafettsäure stammen.

7. Ein Harz, gebildet aus dem Reaktionsprodukt aus einer Monomerenmischung, umfassend:
a. ein ethylenisch ungesättigtes Makromonomer, gebildet durch ein Verfahren, umfassend die Schritte:
i. Erzeugen eines säurefunktionellen Zwischenprodukts als das Acidolysereaktionsprodukt aus einem technischen Polyester und wenigstens einem Element aus der Gruppe, bestehend aus säure- und anhydridfunktionellen Materialien und Mischungen davon, gegebenenfalls in Gegenwart eines Katalysators,
ii. Erzeugen eines Harz-Zwischenprodukts als das Reaktionsprodukt des in (i) erzeugten säurefunktionellen Zwischenprodukts mit einem epoxidfunktionellen Reaktanden mit Methacryl- oder Acryl-Ungesättigtheit, und
b. wenigstens ein anderes ethylenisch ungesättigtes Monomer.

8. Das Harz nach Anspruch 13, wobei der technische Polyester ein biologisch erneuerbarer Polyester ist, der vorzugsweise ausgewählt ist aus der Gruppe, bestehend aus Polymilchsäure, Polyhydroxyalkansäuren, Copolymeren von Polymilchsäure mit Polyhydroxyalkansäuren und Mischungen davon, oder wobei das säurefunktionelle Zwischenprodukt als das Acidolysereaktionsprodukt aus Polymilchsäure und wenigstens einer Säure, umfassend eine Fettsäure, erzeugt wird, wobei die Fettsäure vorzugsweise eine pflanzliche Fettsäure oder eine ungesättigte Fettsäure ist.

9. Das Harz nach Anspruch 13, wobei der epoxidfunktionelle Reaktant mit Methacryl- oder Acryl-Ungesättigtheit Glycidylmethacrylat ist, oder wobei das wenigstens eine andere ethylenisch ungesättigte Monomer säurefunktionell ist.

10. Ein Verfahren zur Erzeugung eines wasserdispergierbaren Harzes, umfassend die Schritte:
a. Bereitstellen wenigstens eines Lösungsmittels, eines Harz-Zwischenprodukts und eines ethylenisch ungesättigten Kupplungsmittels in einem Reaktionsgefäß, wobei das Harz-Zwischenprodukt das Reaktionsprodukt ist aus
(i) einem säurefunktionellen Zwischenprodukt und
(ii) einem hydroxyfunktionellen Reaktanden,
wobei das säurefunktionelle Zwischenprodukt das Acidolysereaktionsprodukt eines technischen Polyesters mit einem Element aus der Gruppe, bestehend aus säure- und anhydridfunktionellen Materialen und Mischungen davon, ist,
b. Umsetzen des Harz-Zwischenprodukts und des ethylenisch ungesättigten Kupplungsmittels, um ein ethylenisch ungesättigtes Makromonomer zu erzeugen,
c. Zugeben von wenigstens einem säurefunktionellen ethylenisch ungesättigten Monomer zum Reaktionsgefäß,
d. Zugeben eines Initiators zum Reaktionsgefäß, wobei der Initiator sich zur Initiierung der Reaktion des ethylenisch ungesättigten Makromonomers und des wenigstens einen säurefunktionellen ethylenisch ungesättigten Monomers eignet.

11. Das Verfahren nach Anspruch 10, wobei das Lösungsmittel ein Öl umfasst, ausgewählt aus den trocknenden und halbtrocknenden Ölen.

12. Ein Verfahren zur Erzeugung eines wasserdispergierbaren Harzes, umfassend die Schritte:
a. Bereitstellen wenigstens eines Lösungsmittels, eines Harz-Zwischenprodukts und wenigstens eines ethylenisch ungesättigten Monomers in einem Reaktionsgefäß, wobei das Harz-Zwischenprodukt das Reaktionsprodukt ist aus
(i) einem säurefunktionellen Zwischenprodukt und
(ii) einem epoxidfunktionellen Reaktanden mit Methacryl- oder Acryl-Ungesättigtheit,
wobei das säurefunktionelle Zwischenprodukt das Acidolysereaktionsprodukt eines technischen Polyesters mit einem Element aus der Gruppe, bestehend aus säure- und anhydridfunktionellen Materialen und Mischungen davon, ist,
b. Zugeben eines Initiators zum Reaktionsgefäß, wobei der Initiator sich zur Initiierung der Reaktion des Harz-Zwischenprodukts und des wenigstens einen säurefunktionellen ethylenisch ungesättigten Monomers eignet, und
c. Umsetzen des Harz-Zwischenprodukts und des wenigstens einen ethylenisch ungesättigten Monomers.

13. Das Verfahren nach Anspruch 12, wobei das säurefunktionelle Zwischenprodukt das Acidolysereaktionsprodukt eines biologisch erneuerbaren Polyesters mit einer Fettsäure ist, oder wobei das säurefunktionelle Zwischenprodukt das Acidolysereaktionsprodukt aus einer Polymilchsäure mit einer pflanzlichen Fettsäure ist, vorzugsweise wobei der epoxidfunktionelle Reaktant Glycidylmethacrylat ist.

14. Das Verfahren nach Anspruch 10 oder 13, wobei das Lösungsmittel Sojabohnenöl umfasst, oder wobei das Lösungsmittel ein flüchtiges organisches Lösungsmittel umfasst, oder wobei das Verfahren ferner den Schritt des Abdestillierens von im Wesentlichen allen flüchtigen Bestandteilen aus der Reaktionskammer durch Vakuumdestillation nach der Zugabe des Initiators umfasst.

15. Das Verfahren nach Anspruch 14, wobei das wenigstens eine ethylenisch ungesättigte Monomer ausgewählt ist aus der Gruppe, bestehend aus Acrylmonomeren, Methacrylmonomeren und Mischungen davon.

## Revendications

1. Résine dispersable dans l'eau formée à partir du produit de réaction d'un mélange monomère qui comprend :
a. Un macromonomère à insaturation éthylénique formé par un processus comprenant les étapes suivantes :
i. production d'un intermédiaire à fonctionnalité acide en tant que produit de la réaction d'acidolyse d'un polyester technique et d'au moins un membre du groupe consistant en des matériaux à fonctionnalités acide et anhydride et des mélanges de ceux-ci, en option en la présence d'un catalyseur ;
ii. production d'un intermédiaire de résine en tant que produit de la réaction de l'intermédiaire à fonctionnalité acide obtenu en (i) et d'un réactif à fonctionnalité hydroxyle, en option en la présence d'un polyacide ; et
iii. réaction de l'intermédiaire de résine obtenu en (ii) et d'un agent de couplage à insaturation éthylénique et
b. Au moins un monomère à insaturation éthylénique et à fonctionnalité acide.

2. Résine de la revendication 1, dans laquelle le polyester technique est un polyester biorenouvelable, préférablement un acide polylactique, ou
dans laquelle le polyester technique est sélectionné dans le groupe consistant en des téréphtalates de polyalkylène et des naphtalates de polyalkylène.

3. Résine de la revendication 1, dans laquelle l'intermédiaire à fonctionnalité acide comprend le produit de la réaction d'acidolyse d'un polyester technique et d'au moins un acide gras, préférablement d'un acide gras de soja.

4. Résine de la revendication 2, dans laquelle l'agent de couplage à insaturation éthylénique est sélectionné dans le groupe consistant en des agents de couplage de la famille des isocyanates, des agents de couplage de la famille des anhydrides et des agents de couplage de la famille des silanes.

5. Résine de la revendication 1, dans laquelle l'agent de couplage à insaturation éthylénique est un agent de couplage de la famille des époxydes.

6. Résine de la revendication 1, dans laquelle le mélange monomère comprend de 10 à environ 90 % du macromonomère à insaturation éthylénique par rapport au poids total du monomère, ou
dans laquelle de 10 à 50 % du poids total de la résine dérive directement du polyester renouvelable et de l'acide gras de soja, et préférablement dans laquelle de 10 à 25 % du poids total de la résine dérive directement du polyester renouvelable et de l'acide gras de soja.

7. Résine formée à partir du produit de réaction d'un mélange monomère qui comprend :
a. Un macromonomère à insaturation éthylénique formé par un processus comprenant les étapes suivantes :
i. production d'un intermédiaire à fonctionnalité acide en tant que produit de la réaction d'acidolyse d'un polyester technique et d'au moins un membre du groupe consistant en des matériaux à fonctionnalités acide et anhydride et des mélanges de ceux-ci, en option en la présence d'un catalyseur ;
ii. production d'un intermédiaire de résine en tant que produit de la réaction de l'intermédiaire à fonctionnalité acide obtenu en (i) et d'un réactif à fonctionnalité époxyde ayant une insaturation méthacrylique ou acrylique ; et
b. Au moins un autre monomère à insaturation éthylénique.

8. Résine de la revendication 13, dans laquelle le polyester technique est un polyester biorenouvelable qui est préférablement sélectionné dans le groupe consistant un acide polylactique, des acides polyhydroxyalkanoïques, des copolymères d'acide polylactique et d'acides polyhydroxyalkanoïques et des mélanges de ceux-ci, ou
dans laquelle l'intermédiaire à fonctionnalité acide est obtenu en tant que produit de la réaction d'acidolyse d'un acide polylactique et d'au moins un acide comprenant un acide gras, l'acide gras étant préférablement un acide gras d'origine végétale ou un acide gras insaturé.

9. Résine de la revendication 13, dans laquelle le réactif à fonctionnalité époxyde ayant une insaturation méthacrylique ou acrylique est le méthacrylate de glycidyle, ou
dans laquelle le au moins un autre monomère à insaturation éthylénique a une fonctionnalité acide.

10. Méthode de production d'une résine dispersable dans l'eau, qui comprend les étapes suivantes :
a. chargement du récipient de réaction avec au moins un solvant, un intermédiaire de résine et un agent de couplage à insaturation éthylénique, l'intermédiaire de résine étant le produit de la réaction
(i) d'un intermédiaire à fonctionnalité acide ; et
(ii) d'un réactif à fonctionnalité hydroxyle,
l'intermédiaire à fonctionnalité acide étant le produit de la réaction d'acidolyse d'un polyester technique et d'un membre du groupe consistant en des matériaux à fonctionnalités acide et anhydride et des mélanges de ceux-ci ;
b. réaction de l'intermédiaire de résine et d'un agent de couplage à insaturation éthylénique pour produire un macromonomère à insaturation éthylénique ;
c. addition d'au moins un monomère à insaturation éthylénique et à fonctionnalité acide dans le récipient de réaction ;
d. addition, dans le récipient de réaction, d'un amorceur approprié pour amorcer la réaction entre le macromonomère à insaturation éthylénique et au moins un monomère à insaturation éthylénique et à fonctionnalité acide.

11. Méthode de la revendication 10, dans laquelle le solvant comprend une huile sélectionnée parmi des huiles siccatives et des huiles semi-siccatives.

12. Méthode de production d'une résine dispersable dans l'eau, qui comprend les étapes suivantes :
a. chargement du récipient de réaction avec au moins un solvant, un intermédiaire de résine et au moins un monomère à insaturation éthylénique, l'intermédiaire de résine étant le produit de la réaction
(i) d'un intermédiaire à fonctionnalité acide ; et
(ii) d'un réactif à fonctionnalité époxyde ayant une insaturation méthacrylique ou acrylique ;
l'intermédiaire à fonctionnalité acide étant le produit de la réaction d'acidolyse d'un polyester technique et d'un membre du groupe consistant en des matériaux à fonctionnalités acide et anhydride et des mélanges de ceux-ci ;
b. addition, dans le récipient de réaction, d'un amorceur approprié pour amorcer la réaction entre l'intermédiaire de résine et le au moins un monomère à insaturation éthylénique et à fonctionnalité acide ; et
c. réaction entre l'intermédiaire de résine et le au moins un monomère à insaturation éthylénique.

13. Méthode de la revendication 12, dans laquelle l'intermédiaire à fonctionnalité acide est le produit de la réaction d'acidolyse d'un polyester biorenouvelable et d'un acide gras ; ou
dans laquelle l'intermédiaire à fonctionnalité acide est le produit de la réaction d'acidolyse d'un acide polylactique et d'un acide gras d'origine végétale ;
et préférablement dans laquelle le réactif à fonctionnalité époxyde est le méthacrylate de glycidyle.

14. Méthode de la revendication 10 ou 13, dans laquelle le solvant comprend une huile de soja ; ou
dans laquelle le solvant comprend un solvant organique volatil ou dans laquelle la méthode comprend également l'étape consistant à distiller essentiellement toutes les substances volatiles de la chambre de réaction par distillation sous vide après addition de l'amorceur.

15. Méthode de la revendication 14, dans laquelle le au moins un monomère à insaturation éthylénique est sélectionné dans le groupe consistant en des monomères acryliques, des monomères méthacryliques et des mélanges de ceux-ci.
